# EUROPEAN PATENT APPLICATION

(11) **EP 4 582 303 A1**
(43) Date of publication of application: **09.07.2025**
(21) Application number: 24222107.5
(22) Date of filing: 20.12.2024
(51) Int. Cl.: B60L 53/66, B60L 58/12, B60L 7/10

(54) **ALTITUDE AND ROUTE ADJUSTED TARGET STATE OF CHARGE (SOC) FOR ELECTRIC VEHICLES**

(30) Priority: 27.12.2023 US 202318397166
(71) Applicant: Siemens Industry, Inc., Alpharetta, GA 30005 (US)
(72) Inventor: FELDMAN, Daniel, New York, 10022 (US); BARKOCZY, Richard, 82110 Germering (DE)
(74) Representative: Isarpatent

(57) **Abstract**

An electric vehicle (EV) charging management system configured for managing charging of an EV comprises an EV charging system for charging a Li-Ion battery and an EVSE which is based on a charging station altitude at which the EVSE is charging the Li-Ion battery, an EV route stored in the EV charging management system and a likelihood that the EV will go downhill when travel commences after charging ends, in which the EV will start travelling without regenerative charging in place, as the EV goes downhill. The EV charging system comprises a processor and a memory storing software instructions that determine a safe and efficient state of charge (SoC), which is not to be exceeded, by adjusting a SoC limit based on the charging station altitude of an EV charging site and an expected route of the EV to provide an altitude and route adjusted target SoC for the EV.

## Description

### BACKGROUND

### 1. Field

Aspects of the present invention generally relate to an electric vehicle (EV) charging management system with a charging station altitude and an EV route adjusted a target state of charge (SoC) for Electric Vehicles (EVs).

### 2. Description of the Related Art

Lithium-Ion (Li-Ion) batteries used in Electric Vehicles (EVs) should not be charged completely, to maintain their longevity. Electric Vehicles normally use regenerative breaking to recharge an EV battery, creating the double benefit of increasing overall energy efficiency and reducing the utilization of the vehicle's brake pads. Once the EV battery reaches its full state of charge (SoC), or an SoC considered to be unhealthy overtime, regenerative breaking is disabled, decreasing overall efficiency and safety. Current EV charging management systems do not take into consideration the altitude at which the vehicle is charging, and the likelihood that it will go downhill when travel commences after charging ends. This can cause frequent situations for certain locations and frequent routes, in which the EV will start travelling without regenerative charging in place, as it goes downhill.

Drivers either don't take advantage of regenerative braking when parking on locations with an altitude/route that would benefit from regenerative breaking, or manually adjust (when possible) the maximum target SoC, without optimizing the target SoC.

Therefore, a system is then needed for altitude and route adjusted target SoC for Electric Vehicles.

### SUMMARY

Briefly described, aspects of the present invention relate to an electric vehicle (EV) charging management system with a charging station altitude and an EV route adjusted a target state of charge (SoC) for Electric Vehicles (EVs). The system that adjusts target SoC based on altitude and route relies on the following. Vehicle SoC which is acquired either directly from the vehicle original equipment manufacturer (OEM) through its application programming interface (API), from the vehicle via ISO 15118, DIN70121 or a similar method, or via a telematics dongle. The altitude of the charging location is determined based on the physical address in which the EV charger is located. The expected altitude decrease in the EV route can be either calculated or estimated. The expected SoC gain in the EV route can be calculated by measuring the SoC variation of the specific vehicle model either directly through its API or through a telematics dongle. The target charging session SoC for a vehicle in a location and an expected route is set so that at no point during that route the vehicle SoC exceeds the maximum safe SoC for that vehicle model. The maximum safe SoC for a certain vehicle is provided by the EV manufacture. This invention reduces the probability of a vehicle reaching a state in which it cannot leverage the advantages of regenerative breaking due to the altitude in which it chargers and the EV route followed after charging by adjusting the maximum SoC to which the vehicle is to be charged according to the expected gains in SoC through regenerative breaking on the vehicle's planned route, so SoC never goes above a pre-determined safe threshold.

In accordance with one illustrative embodiment of the present invention, an electric vehicle (EV) charging management system is provided. It is configured for managing charging of an electric vehicle (EV). The EV charging management system comprises an EV charging system for charging a Lithium-Ion (Li-Ion) battery and an Electric Vehicle Supply Equipment (EVSE) of the EV charging system which is based on a charging station altitude at which the EVSE is charging the Li-Ion battery, an EV route stored in the EV charging management system and a likelihood that the EV will go downhill when travel commences after charging ends, in which the EV will start travelling without regenerative charging in place, as the EV goes downhill. The EV charging system comprises a processor and a memory storing software (SW) instructions that, when executed by the processor, cause the EV charging system to determine a safe and efficient state of charge (SoC), which is not to be exceeded, by adjusting a SoC limit based on the charging station altitude of an EV charging site or location and an expected route of the EV to provide an altitude and route adjusted target SoC for the EV.

In accordance with one illustrative embodiment of the present invention, a method is provided. The method provides an electric vehicle (EV) charging management system configured for managing charging of an electric vehicle (EV). The method comprises providing an EV charging system for charging a Lithium-Ion (Li-Ion) battery and providing an Electric Vehicle Supply Equipment (EVSE) of the EV charging system which is based on a charging station altitude at which the EVSE is charging the Li-Ion battery, an EV route stored in the EV charging management system and a likelihood that the EV will go downhill when travel commences after charging ends, in which the EV will start travelling without regenerative charging in place, as the EV goes downhill. The EV charging system comprises a processor and a memory storing software (SW) instructions that, when executed by the processor, cause the EV charging system to determine a safe and efficient state of charge (SoC), which is not to be exceeded, by adjusting a SoC limit based on the charging station altitude of an EV charging site or location and an expected route of the EV to provide an altitude and route adjusted target SoC for the EV.

The above described features and advantages, as well as others, will become more readily apparent to those of ordinary skill in the art by reference to the following detailed description and accompanying drawings. While it would be desirable to provide one or more of these or other advantageous features, the teachings disclosed herein extend to those embodiments which fall within the scope of the appended claims, regardless of whether they accomplish one or more of the above-mentioned advantages.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects.
FIG. 1 illustrates an altitude and route adjusted target state of charge (SoC) charging management system for Electric Vehicles (EVs) in accordance with an embodiment of the present invention.
FIG. 2 illustrates a detailed altitude and route adjusted target state of charge (SoC) charging management system for Electric Vehicles (EVs) in accordance with an embodiment of the present invention.
FIG. 3 illustrates a routing algorithm that adjusts a target state of charge (SoC) based on a charging station altitude and an EV route stored in a charging management system or it can come from an EV via an API or it can be manually entered or it can come from a scheduling platform via an API in accordance with an embodiment of the present invention.
FIG. 4 illustrates an alternative routing algorithm in which no machine learning is required in accordance with an embodiment of the present invention.
FIG. 5 illustrates a method of providing an electric vehicle (EV) charging management system configured for managing charging of an electric vehicle (EV) in accordance with an embodiment of the present invention.

### DETAILED DESCRIPTION

Various technologies that pertain to systems and methods that provide an altitude and route adjusted target state of charge (SoC) charging management system for Electric Vehicles (EVs) are presented. An algorithm is presented that adjusts a target state of charge (SoC) based on a charging station altitude and an EV route stored in a charging management system or it can come from an EV via an API or it can be manually entered or it can come from a scheduling platform via an API. An alternative algorithm in which no machine learning is required is also presented. The invention guarantees a safe and efficient SoC is never exceeded. Any SoC adjustment due to a vehicle charging site altitude and an expected route would provide this feature. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

To facilitate an understanding of embodiments, principles, and features of the present invention, they are explained hereinafter with reference to implementation in illustrative embodiments. In particular, they are described in the context of an altitude and route adjusted target state of charge (SoC) charging management system. Embodiments of the present invention, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

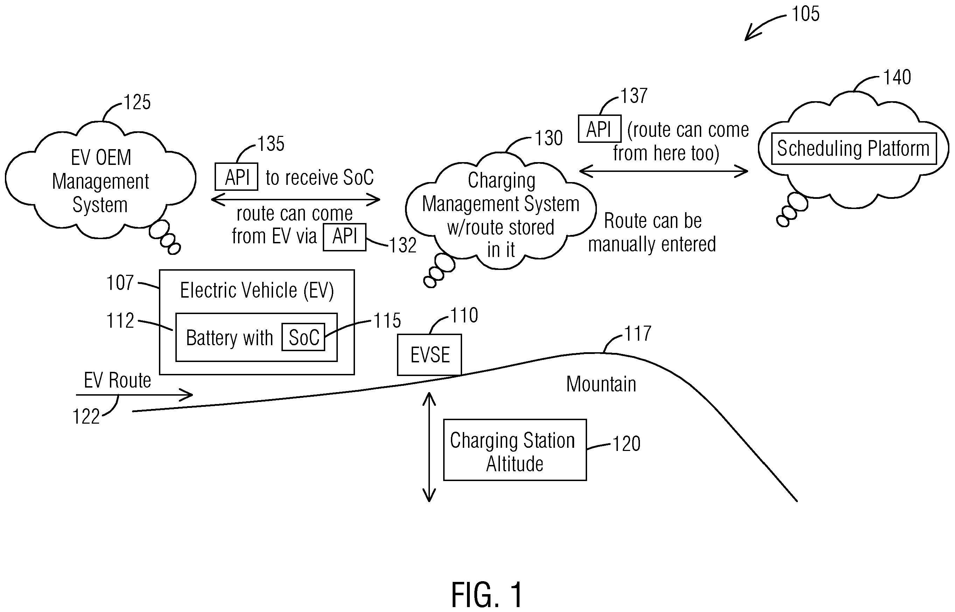

These and other embodiments of the system are provided for providing an altitude and route adjusted target state of charge (SoC) charging management system according to the present disclosure are described below with reference to FIG. 1 herein. The drawing is not necessarily drawn to scale.

Consistent with an embodiment of the present invention, FIG. 1 represents an altitude and route adjusted target state of charge (SoC) charging management system 105 for an Electric Vehicle (EV) 107 in accordance with an embodiment of the present invention. The system 105 comprises an EV charger such as Electric Vehicle Supply Equipment (EVSE) 110 configured to charge an EV battery 112 with a state of charge (SoC) 115. The EVSE 110 may be located on a mountain 117 such that the EVSE 110 has a charging station altitude 120. The EV 107 may be programmed to follow an EV route 122 via the mountain 117 by going uphill and coming downhill. The EV 107 may include an associated EV OEM management system 125 to communicate with an associated charging management system 130 of the EVSE 110.

The EV route 122 information may come from the EV 107 via an Application Programming Interface (API) 132. An API 135 to receive the SoC 115. The EV route 122 information may be stored in the associated charging management system 130. The EV route 122 information may be manually entered. Via an API 137 the EV route 122 information may come from a scheduling platform 140. An API, or application programming interface, is a set of defined rules that enable different applications to communicate with each other. For example, an application programming interface may be a software intermediary that allows two applications to talk to each other. APIs are an accessible way to extract and share data within and across platforms.

The EV routing features of the API extend the routing service with electric vehicle specific options. Routing responses can contain details of energy consumption of the vehicle on the route. To plan a route with EV, check how far the EV 107 can travel and the type of EV chargers it's compatible with. Plan a journey to include stops with en route EV chargers. A built-in EV routing app or an EV routing app on a phone may be used.

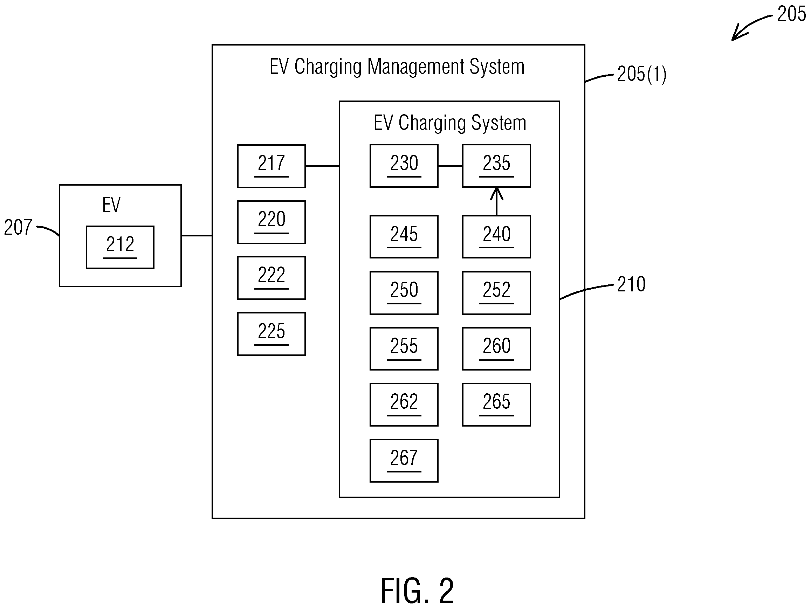

Referring to FIG. 2, it illustrates a detailed altitude and route adjusted target state of charge (SoC) charging management system 205 with an electric vehicle (EV) charging management system 205(1) for Electric Vehicles (EVs) in accordance with an embodiment of the present invention. The system 205 is configured for managing charging of an electric vehicle (EV) 207. The system 205(1) comprises an EV charging system 210 for charging a Lithium-Ion (Li-Ion) battery 212 of the EV 207.

The system 205(1) further comprises an Electric Vehicle Supply Equipment (EVSE) 217 of the EV charging system 210 which is based on a charging station altitude 220 at which the EVSE 217 is charging the Li-Ion battery 212, an EV route 222 stored in the EV charging management system 205(1) and a likelihood 225 that the EV 207 will go downhill when travel commences after charging ends which can avoid frequent situations for certain locations and frequent routes, in which the EV 207 will start travelling without regenerative charging in place, as the EV 207 goes downhill. Regenerative braking is a mechanism found on most hybrid and full-electric vehicles. It captures the kinetic energy from braking and converts it into the electrical power that charges the vehicle's high voltage battery. Regenerative brakes work by reversing electric motors that propel a vehicle. It works like a generator and feeds energy back into the hybrid or electric system to help replenish a little bit of range. These small boosts in battery range can accumulate and improve efficiency over time when used regularly. It is a mechanism of energy recovery wherein kinetic energy of a vehicle is converted into an immediately usable form or stored until required. With a braking scenario, the EV's momentum is used by the electric motors to recover energy that would otherwise be lost to the brake discs as heat.

The EV charging system 210 further comprises a processor 230 and a memory 235 storing software (SW) instructions 240 that, when executed by the processor 230, cause the EV charging system 210 to determine a safe and efficient state of charge (SoC) 245, which is not to be exceeded, by adjusting a SoC limit 250 based on the charging station altitude 220 of an EV charging site or location 252 and an expected route 255 of the EV 207 to provide an altitude and route adjusted target SoC 260 for the EV 207.

The memory 235 storing the software (SW) instructions 240 that, when executed by the processor 230, cause the EV charging management system 205 to reduce a probability of the EV 207 reaching a state in which it cannot leverage advantages of regenerative breaking due to the charging station altitude 220 at which it charges, and the EV route followed after charging by adjusting a maximum SoC 262 to which the EV 207 is to be charged according to expected gains in a vehicle SoC 265 through regenerative breaking on a planned roue of the EV 207, so the vehicle SoC 265 never goes above a pre-determined safe threshold 267.

The EV charging management system 205(1) that adjusts the altitude and route adjusted target SoC 260 based on the charging station altitude 220 and the EV route 222 relies on the vehicle SoC 265 which is acquired either directly from a vehicle Original Equipment Manufacturer (OEM) through its Application Programming Interface (API) or via a telematics dongle. A telematics device is an instrument that records information about your driving behavior, including how fast you drive, how hard you brake, and the distance you drive. For example, telematics provides a digital blueprint of every aspect of a vehicle's operation, helping fleet managers understand where improvements can be made in accident prevention measures and driver safety standards.

The charging station altitude 220 of the EV charging site or location 252 is determined based on a physical address in which the EVSE 217 such as an EV charger is located. An expected altitude decrease in the EV route 222 may be calculated using a routing algorithm and a destination entered by a driver or a fleet manager. An expected altitude decrease in the EV route may be estimated through machine learning based on historic travel patterns of the EV when leaving the EV charging site or location 252. An expected SoC gain in the EV route 222 is calculated by measuring a SoC variation of a specific vehicle model either directly through its API or through a telematics dongle: if a specific vehicle in that route does not have API connectivity or a dongle, losses for vehicles of the same model for which there is data can be used or if a vehicle never travelled a specific route but travelled routes with similar loss of elevation that would cause a SoC gain, that value can be used instead or if a vehicle always charges to full SoC in a certain location, not allowing to learn how much SoC is gained, an administrator can set the vehicle to start a test trip on a relative low SoC, EV model dependent (e.g. 60%), which ensures that it will be possible to observe what is a maximum SoC gain during the EV route, and whether at any point the vehicle SoC exceeds a stating SoC in that test trip.

A target charging session SoC for a vehicle in a location and an expected route is set so that at no point during that route the vehicle SoC 265 exceeds a maximum safe SoC for that vehicle model, wherein the maximum safe SoC for a certain vehicle is provided by an EV manufacturer.

The EV charging management system 205(1) that adjusts the altitude and route adjusted target SoC 260 based on the charging station altitude 220 and the EV route 222 relies on an algorithm in which no machine learning is required and it is based on a mathematical derivative of a height curve such that positives slopes and negatives slopes are weighted with different efficiency factors.

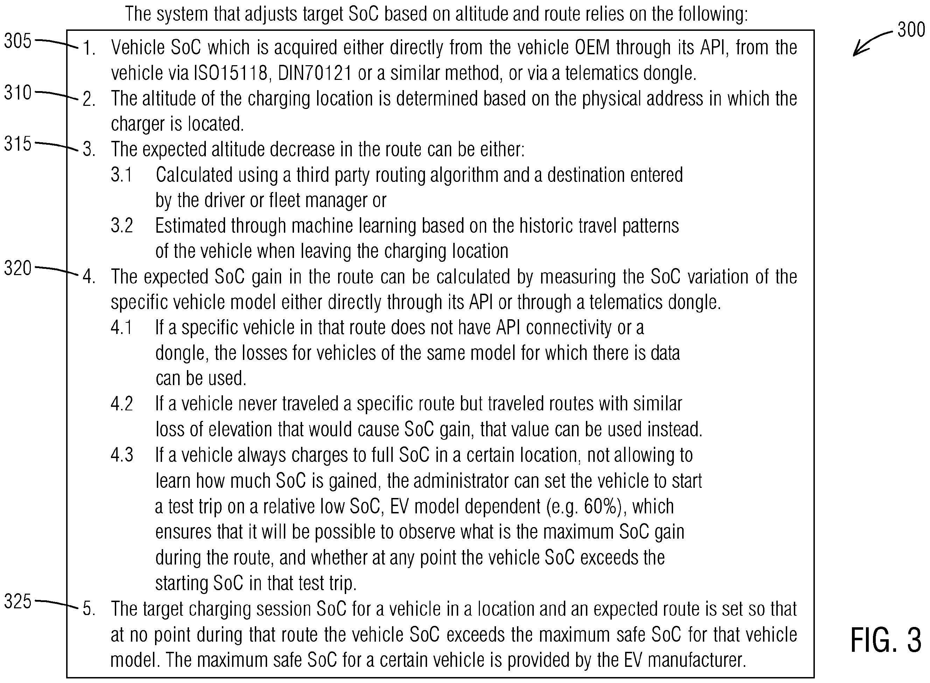

Turning now to FIG. 3, it illustrates a routing algorithm 300 that adjusts a target state of charge (SoC) based on a charging station altitude and an EV route stored in a charging management system or it can come from an EV via an API or it can be manually entered or it can come from a scheduling platform via an API in accordance with an embodiment of the present invention.

In a step 305 of the routing algorithm 300, a vehicle SoC is acquired either directly from the vehicle OEM through its API from the vehicle via ISO 15118, DIN70121 or a similar method, or via a telematics dongle. In a step 310 of the routing algorithm 300, an altitude of a charging location is determined based on a physical address in which an EV charger is located. In a step 315 of the routing algorithm 300, an expected altitude decrease in an EV route can be either calculated or estimated. In a step 320 of the routing algorithm 300, an expected SoC gain in the EV route can be calculated by measuring a SoC variation of the specific vehicle model either directly through its API or through a telematics dongle. In a step 325 of the routing algorithm 300, a target charging session SoC for a vehicle in a location and an expected route is set so that at no point during that route the vehicle SoC exceeds a maximum safe SoC for that vehicle model. The maximum safe SoC for a certain vehicle is provided by an EV manufacturer.

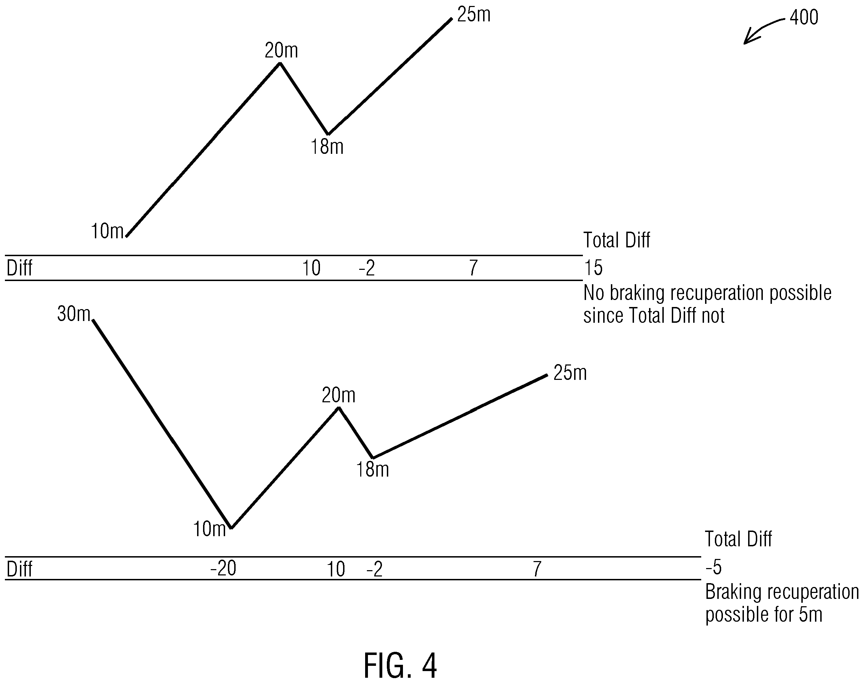

FIG. 4 illustrates an alternative routing algorithm 400 in which no machine learning is required in accordance with an embodiment of the present invention. There may be an even more advanced routing algorithm than the routing algorithm 300 in which no machine learning is required. For example, based on a mathematical derivative of a height curve. Positive slopes and negative slopes could be weighted with different efficiency factors (not shown). The example shown uses an equal efficiency factor (of 1) for negative and positive slope.

Some examples of calculation of the SOC that could be saved for braking energy based on the potential energy are following. Some calculations were made with the impact for standard EVs and common height differences (e.g., 100m/600m). The values are between 0.1kWh (0.1% for 55kWh battery) and 1.9kWh (3.5% for 55kWh battery). In the case of trucks with more weight and bigger batteries, the percentage may be same, but the energetic values may be large enough to present an overtime good saving in the efficiency of charging. For example, in 150kwh battery a 1 % value is equivalent to 1.5kWh, for every trip. Assuming 300 trips per year, we have 450kWh, which is equivalent to a cost saving of $225/year.

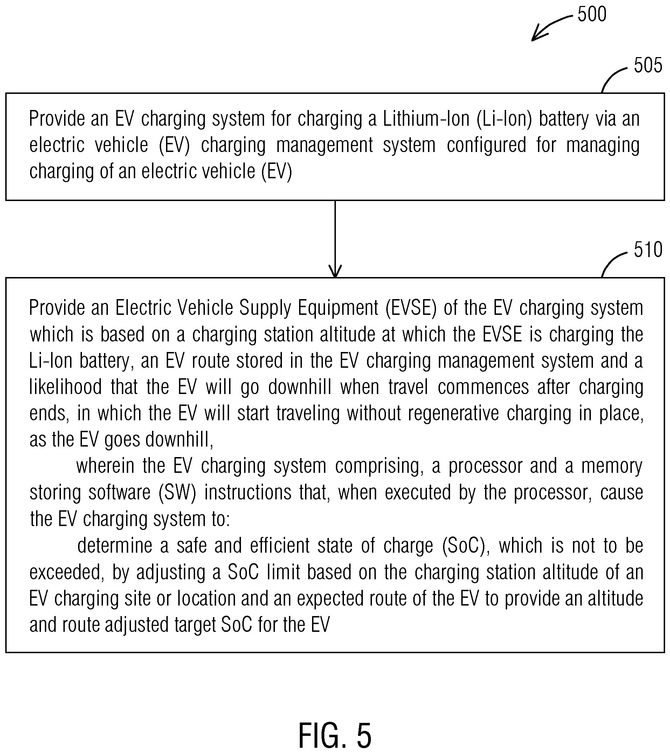

FIG. 5 illustrates a method 500 of providing an electric vehicle (EV) charging management system configured for managing charging of an electric vehicle (EV) in accordance with an embodiment of the present invention. Reference is made to the elements and features described in FIGs. 1-4. It should be appreciated that some steps are not required to be performed in any particular order, and that some steps are optional.

The method 500 comprises a step 505 of providing an EV charging system for charging a Lithium-Ion (Li-Ion) battery. The method 500 further comprises a step 510 of providing an Electric Vehicle Supply Equipment (EVSE) of the EV charging system which is based on a charging station altitude at which the EVSE is charging the Li-Ion battery, an EV route stored in the EV charging management system and a likelihood that the EV will go downhill when travel commences after charging ends which can avoid frequent situations for certain locations and frequent routes, in which the EV will start travelling without regenerative charging in place, as the EV goes downhill. The EV charging system comprises a processor and a memory storing software (SW) instructions that, when executed by the processor, cause the EV charging system to determine a safe and efficient state of charge (SoC), which is not to be exceeded, by adjusting a SoC limit based on the charging station altitude of an EV charging site or location and an expected route of the EV to provide an altitude and route adjusted target SoC for the EV.

While an electric vehicle (EV) charging management system is described here a range of one or more other charging systems are also contemplated by the present invention. For example, other systems may be implemented based on one or more features presented above without deviating from the spirit of the present invention.

The techniques described herein can be particularly useful for any SoC adjustment due to a vehicle charging site altitude and an expected route. While particular embodiments are described in terms of this adjustment, the techniques described herein are not limited to such a system but can also be used with other types of systems.

While embodiments of the present invention have been disclosed in exemplary forms, it will be apparent to those skilled in the art that many modifications, additions, and deletions can be made therein without departing from the spirit and scope of the invention and its equivalents, as set forth in the following claims.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation. Various substitutions, modifications, additions and/or rearrangements within the spirit and/or scope of the underlying inventive concept will become apparent to those skilled in the art from this disclosure.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms.

In the foregoing specification, the invention has been described with reference to specific embodiments. However, one of ordinary skill in the art appreciates that various modifications and changes can be made without departing from the scope of the invention. Accordingly, the specification and figures are to be regarded in an illustrative rather than a restrictive sense, and all such modifications are intended to be included within the scope of invention.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature or function). Rather, the description is intended to describe illustrative embodiments, features and functions in order to provide a person of ordinary skill in the art context to understand the invention without limiting the invention to any particularly described embodiment, feature or function. While specific embodiments of, and examples for, the invention are described herein for illustrative purposes only, various equivalent modifications are possible within the spirit and scope of the invention, as those skilled in the relevant art will recognize and appreciate. As indicated, these modifications may be made to the invention in light of the foregoing description of illustrated embodiments of the invention and are to be included within the spirit and scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the invention.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the spirit and scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

### FURTHER EMBODIMENTS

1. An electric vehicle (EV) charging management system configured for managing charging of an electric vehicle (EV), the EV charging management system comprising:
   an EV charging system for charging a Lithium-Ion (Li-Ion) battery; and
   an Electric Vehicle Supply Equipment (EVSE) of the EV charging system which is based on a charging station altitude at which the EVSE is charging the Li-Ion battery, an EV route stored in the EV charging management system and a likelihood that the EV will go downhill when travel commences after charging ends, in which the EV will start travelling without regenerative charging in place, as the EV goes downhill,
   wherein the EV charging system comprising, a processor and a memory storing software (SW) instructions that, when executed by the processor, cause the EV charging system to:
      determine a safe and efficient state of charge (SoC), which is not to be exceeded, by adjusting a SoC limit based on the charging station altitude of an EV charging site or location and an expected route of the EV to provide an altitude and route adjusted target SoC for the EV.
2. The EV charging management system of embodiment 1, wherein the memory storing software (SW) instructions that, when executed by the processor, cause the EV charging management system to:
   reduce a probability of the EV reaching a state in which it cannot leverage advantages of regenerative breaking due to the charging station altitude at which it charges, and an EV route followed after charging by adjusting a maximum SoC to which the EV is to be charged according to expected gains in a vehicle SoC through regenerative breaking on a planned roue of the EV, so the vehicle SoC never goes above a pre-determined safe threshold.
3. The EV charging management system of embodiment 2, wherein the EV charging management system that adjusts the charging station altitude and route adjusted target SoC based on the charging station altitude and the EV route relies on the vehicle SoC which is acquired either directly from a vehicle Original Equipment Manufacturer (OEM) through its Application Programming Interface (API) or via a telematics dongle.
4. The EV charging management system of embodiment 3, wherein the charging station altitude of the EV charging site or location is determined based on a physical address in which the EVSE such as an EV charger is located.
5. The EV charging management system of embodiment 4, wherein an expected altitude decrease in the EV route is calculated using a routing algorithm and a destination entered by a driver or a fleet manager.
6. The EV charging management system of embodiment 4, wherein an expected altitude decrease in the EV route is estimated through machine learning based on historic travel patterns of the EV when leaving the EV charging site or location.
7. The EV charging management system of embodiment 5, wherein an expected SoC gain in the EV route is calculated by measuring a SoC variation of a specific vehicle model either directly through its API or through a telematics dongle.
8. The EV charging management system of embodiment 7, wherein if a specific vehicle in that route does not have API connectivity or a dongle, losses for vehicles of the same model for which there is data can be used
   or
   if a vehicle never travelled a specific route but travelled routes with similar loss of elevation that would cause a SoC gain, that value can be used instead
      or
   if a vehicle always charges to full SoC in a certain location, not allowing to learn how much SoC is gained, an administrator can set the vehicle to start a test trip on a relative low SoC, EV model dependent (e.g. 60%), which ensures that it will be possible to observe what is a maximum SoC gain during the EV route, and whether at any point the vehicle SoC exceeds a stating SoC in that test trip.
9. The EV charging management system of embodiment 8, wherein a target charging session SoC for a vehicle in a location and an expected route is set so that at no point during that route the vehicle SoC exceeds a maximum safe SoC for that vehicle model, wherein the maximum safe SoC for a certain vehicle is provided by an EV manufacturer.
10. The EV charging management system of embodiment 2, wherein the EV charging management system that adjusts the charging station altitude and route adjusted target SoC based on the charging station altitude and the EV route relies on an algorithm in which no machine learning is required and it is based on a mathematical derivative of a height curve such that positives slopes and negatives slopes are weighted with different efficiency factors.
11. A method of providing an electric vehicle (EV) charging management system configured for managing charging of an electric vehicle (EV), the method comprising:
   providing an EV charging system for charging a Lithium-Ion (Li-Ion) battery; and
   providing an Electric Vehicle Supply Equipment (EVSE) of the EV charging system which is based on a charging station altitude at which the EVSE is charging the Li-Ion battery, an EV route stored in the EV charging management system and a likelihood that the EV will go downhill when travel commences after charging ends, in which the EV will start travelling without regenerative charging in place, as the EV goes downhill,
   wherein the EV charging system comprising, a processor and a memory storing software (SW) instructions that, when executed by the processor, cause the EV charging system to:
      determine a safe and efficient state of charge (SoC), which is not to be exceeded, by adjusting a SoC limit based on the charging station altitude of an EV charging site or location and an expected route of the EV to provide an altitude and route adjusted target SoC for the EV.
12. The method of embodiment 11, wherein the memory storing software (SW) instructions that, when executed by the processor, cause the EV charging management system to:
   reduce a probability of the EV reaching a state in which it cannot leverage advantages of regenerative breaking due to the charging station altitude at which it charges, and an EV route followed after charging by adjusting a maximum SoC to which the EV is to be charged according to expected gains in a vehicle SoC through regenerative breaking on a planned roue of the EV, so the vehicle SoC never goes above a pre-determined safe threshold.
13. The method of embodiment 12, wherein the EV charging management system that adjusts the charging station altitude and route adjusted target SoC based on the charging station altitude and the EV route relies on the vehicle SoC which is acquired either directly from a vehicle Original Equipment Manufacturer (OEM) through its Application Programming Interface (API) or via a telematics dongle.
14. The method of embodiment 13, wherein the charging station altitude of the EV charging site or location is determined based on a physical address in which the EVSE such as an EV charger is located.
15. The method of embodiment 14, wherein an expected altitude decrease in the EV route is calculated using a routing algorithm and a destination entered by a driver or a fleet manager.
16. The method of embodiment 14, wherein an expected altitude decrease in the EV route is estimated through machine learning based on historic travel patterns of the EV when leaving the EV charging site or location.
17. The method of embodiment 15, wherein an expected SoC gain in the EV route is calculated by measuring a SoC variation of a specific vehicle model either directly through its API or through a telematics dongle.
18. The method of embodiment 17, wherein if a specific vehicle in that route does not have API connectivity or a dongle, losses for vehicles of the same model for which there is data can be used
   or
   if a vehicle never travelled a specific route but travelled routes with similar loss of elevation that would cause a SoC gain, that value can be used instead
      or
   if a vehicle always charges to full SoC in a certain location, not allowing to learn how much SoC is gained, an administrator can set the vehicle to start a test trip on a relative low SoC, EV model dependent (e.g. 60%), which ensures that it will be possible to observe what is a maximum SoC gain during the EV route, and whether at any point the vehicle SoC exceeds a stating SoC in that test trip.
19. The method of embodiment 18, wherein a target charging session SoC for a vehicle in a location and an expected route is set so that at no point during that route the vehicle SoC exceeds a maximum safe SoC for that vehicle model, wherein the maximum safe SoC for a certain vehicle is provided by an EV manufacturer.
20. The method of embodiment 12, wherein the EV charging management system that adjusts the charging station altitude and route adjusted target SoC based on the charging station altitude and the EV route relies on an algorithm in which no machine learning is required and it is based on a mathematical derivative of a height curve such that positives slopes and negatives slopes are weighted with different efficiency factors.

## Claims

1. An electric vehicle (EV) charging management system configured for managing charging of an electric vehicle (EV), the EV charging management system comprising:
an EV charging system for charging a Lithium-Ion (Li-Ion) battery; and
an Electric Vehicle Supply Equipment (EVSE) of the EV charging system which is based on a charging station altitude at which the EVSE is charging the Li-Ion battery, an EV route stored in the EV charging management system and a likelihood that the EV will go downhill when travel commences after charging ends, in which the EV will start travelling without regenerative charging in place, as the EV goes downhill,
wherein the EV charging system comprising, a processor and a memory storing software (SW) instructions that, when executed by the processor, cause the EV charging system to:
determine a safe and efficient state of charge (SoC), which is not to be exceeded, by adjusting a SoC limit based on the charging station altitude of an EV charging site or location and an expected route of the EV to provide an altitude and route adjusted target SoC for the EV.

2. The EV charging management system of claim 1, wherein the memory storing software (SW) instructions that, when executed by the processor, cause the EV charging management system to:
reduce a probability of the EV reaching a state in which it cannot leverage advantages of regenerative breaking due to the charging station altitude at which it charges, and an EV route followed after charging by adjusting a maximum SoC to which the EV is to be charged according to expected gains in a vehicle SoC through regenerative breaking on a planned roue of the EV, so the vehicle SoC never goes above a pre-determined safe threshold.

3. The EV charging management system of claim 1 or 2, wherein the EV charging management system that adjusts the charging station altitude and route adjusted target SoC based on the charging station altitude and the EV route relies on the vehicle SoC which is acquired either directly from a vehicle Original Equipment Manufacturer (OEM) through its Application Programming Interface (API) or via a telematics dongle.

4. The EV charging management system according to any of the preceding claims, wherein the charging station altitude of the EV charging site or location is determined based on a physical address in which the EVSE such as an EV charger is located.

5. The EV charging management system according to any of the preceding claims, wherein an expected altitude decrease in the EV route is calculated using a routing algorithm and a destination entered by a driver or a fleet manager.

6. The EV charging management system according to any of the claims 1 to 4, wherein an expected altitude decrease in the EV route is estimated through machine learning based on historic travel patterns of the EV when leaving the EV charging site or location.

7. The EV charging management system according to any of the preceding claims, wherein an expected SoC gain in the EV route is calculated by measuring a SoC variation of a specific vehicle model either directly through its API or through a telematics dongle.

8. The EV charging management system according to any of the preceding claims, wherein if a specific vehicle in that route does not have API connectivity or a dongle, losses for vehicles of the same model for which there is data can be used
or
if a vehicle never travelled a specific route but travelled routes with similar loss of elevation that would cause a SoC gain, that value can be used instead
or
if a vehicle always charges to full SoC in a certain location, not allowing to learn how much SoC is gained, an administrator can set the vehicle to start a test trip on a relative low SoC, EV model dependent (e.g. 60%), which ensures that it will be possible to observe what is a maximum SoC gain during the EV route, and whether at any point the vehicle SoC exceeds a stating SoC in that test trip.

9. The EV charging management system according to any of the preceding claims, wherein a target charging session SoC for a vehicle in a location and an expected route is set so that at no point during that route the vehicle SoC exceeds a maximum safe SoC for that vehicle model, wherein the maximum safe SoC for a certain vehicle is provided by an EV manufacturer.

10. The EV charging management system of claim 2, wherein the EV charging management system that adjusts the charging station altitude and route adjusted target SoC based on the charging station altitude and the EV route relies on an algorithm in which no machine learning is required and it is based on a mathematical derivative of a height curve such that positives slopes and negatives slopes are weighted with different efficiency factors.

11. A method of providing an electric vehicle (EV) charging management system configured for managing charging of an electric vehicle (EV), in particular an electric vehicle charging management system according to any of the claims 1 to 10, the method comprising:
providing an EV charging system for charging a Lithium-Ion (Li-Ion) battery; and
providing an Electric Vehicle Supply Equipment (EVSE) of the EV charging system which is based on a charging station altitude at which the EVSE is charging the Li-Ion battery, an EV route stored in the EV charging management system and a likelihood that the EV will go downhill when travel commences after charging ends, in which the EV will start travelling without regenerative charging in place, as the EV goes downhill,
wherein the EV charging system comprising, a processor and a memory storing software (SW) instructions that, when executed by the processor, cause the EV charging system to:
determine a safe and efficient state of charge (SoC), which is not to be exceeded, by adjusting a SoC limit based on the charging station altitude of an EV charging site or location and an expected route of the EV to provide an altitude and route adjusted target SoC for the EV.

12. The method of claim 11, wherein the memory storing software (SW) instructions that, when executed by the processor, cause the EV charging management system to:
reduce a probability of the EV reaching a state in which it cannot leverage advantages of regenerative breaking due to the charging station altitude at which it charges, and an EV route followed after charging by adjusting a maximum SoC to which the EV is to be charged according to expected gains in a vehicle SoC through regenerative breaking on a planned roue of the EV, so the vehicle SoC never goes above a pre-determined safe threshold.

13. The method of claim 11 or 12, wherein the EV charging management system that adjusts the charging station altitude and route adjusted target SoC based on the charging station altitude and the EV route relies on the vehicle SoC which is acquired either directly from a vehicle Original Equipment Manufacturer (OEM) through its Application Programming Interface (API) or via a telematics dongle.

14. The method according to any of the claims 11 to 13, wherein the charging station altitude of the EV charging site or location is determined based on a physical address in which the EVSE such as an EV charger is located.

15. The method according to any of the claims 11 to 14, wherein an expected altitude decrease in the EV route is calculated using a routing algorithm and a destination entered by a driver or a fleet manager.
